# EUROPEAN PATENT SPECIFICATION

(11) **EP 3 943 767 B1**
(45) Date of publication and mention of the grant of the patent: **16.10.2024**
(21) Application number: 20773789.1
(22) Date of filing: 09.03.2020
(51) Int. Cl.: F16C 19/16, F16C 33/38, F16C 33/66

(54) **ANGULAR CONTACT BALL BEARING AND RETAINER FOR ANGULAR CONTACT BALL BEARING**
SCHRÄGKUGELLAGER UND HALTER FÜR SCHRÄGKUGELLAGER
ROULEMENT À BILLES ANGULAIRE, ET ÉLÉMENT DE MAINTIEN POUR ROULEMENT À BILLES ANGULAIRE

(30) Priority: 18.03.2019 JP 2019049356
(43) Date of publication of application: 26.01.2022
(73) Proprietor: NTN Corporation, Osaka-shi, Osaka 550-0003 (JP)
(72) Inventor: KOYAMA, Mineo, Kuwana-shi, Mie 511-8678 (JP)
(74) Representative: Patent- und Rechtsanwälte Behrmann Wagner PartG mbB
(86) International application number: PCT/JP2020/009947
(87) International publication number: WO 2020/189364

(56) References cited:
- JP-A- 2016 145 644
- JP-A- H05 346 122
- JP-B2- 4 917 110

## Description

### CROSS REFERENCE TO THE RELATED APPLICATION

This application is based on and claims Convention priority to Japanese patent application No. 2019-049356, filed March 18, 2019.

### BACKGROUND OF THE INVENTION

### (Field of the Invention)

The present invention relates to an angular contact ball bearing according to the preamble of claim 1, as used for e.g. a spindle of a machine tool.

### (Description of Related Art)

Angular contact ball bearings are widely used as support bearings which are operated at high speed (e.g. bearings for spindles of machine tools), and such bearings often employ outer-ring-guided retainers or rolling-element-guided retainers (for example, Patent Documents 1 to 3). Likewise, a ball bearing according to the preamble of claim 1 is disclosed in JP H05346122 A.

To lubricate such bearings, air-oil lubrication or oil mist lubrication may be used, which can constantly supply new oil and maintain a stable lubrication state for a long period of time. Alternatively, grease lubrication may be used, which is excellent in economy because it does not require auxiliary equipment and piping and is environmentally friendly because it produces an extremely small amount of mist.

Regardless of the type of lubrication, in a high-speed region where a dn value exceeds 700000, which is calculated by multiplying an inner diameter of an inner ring of a bearing by a rotational speed, angular contact ball bearings with small-diameter balls adapted for high-speed operation are widely used rather than those with standard size balls in order to suppress temperature rise by reducing centrifugal force acting on the rolling elements and reducing a contact area between the rolling elements and the raceway surfaces. Use of the small-diameter balls makes it possible to suppress temperature rise during high-speed operation.

Where a bearing of an inner ring rotation type is used with air-oil lubrication, air oil is supplied toward a space between an inner ring and a retainer such that the lubricant supplied along with compressed air is more easily distributed throughout an inside of the bearing. The lubricating oil supplied is distributed by centrifugal force to an inner diametric surface (inner peripheral surface) of the retainer and an inner diametric surface of an outer ring and is temporarily retained thereon in the form of oil film.

During high-speed and continuous operation with short stop times, the lubricant temporarily retained on the inner diametric surface of the outer ring and the inner diametric surface of the retainer adheres to ball surfaces, and the lubricant is delivered to a raceway surface of the inner ring and pocket surfaces (contact surfaces with the balls) of the retainer, so that smooth operation is possible under the high-speed operation condition for a long period of time.

The amount of oil adhering to the ball surfaces varies depending on use conditions. In a case of continuous operation in a high-speed range, the amount of oil adhering to the ball surfaces is extremely small. This also results in a small amount of oil delivered to the raceway surface of the inner ring and the pocket surfaces of the retainer. In addition, nowadays, less lubricant may sometimes be supplied to the inside of the bearing for the purpose of mist reduction in working environment or environmental load reduction. In order to effectively use a small amount of lubricant supplied to the inside of the bearing, a technology has been developed, in which a nozzle tip end provided in an outer ring spacer is arranged at a position near an inner diametric part of a retainer in a radial direction such that lubricant is supplied along an inclined surface of a counter part of an inner ring of an adjacent bearing to save the lubricant and compressed air (for example, Patent Document 4).

### [Related Document]

### [Patent Document]

[Patent Document 1] JP Laid-open Patent Publication No. 2011-117542
[Patent Document 2] JP Laid-open Patent Publication No. 2016-145644
[Patent Document 3] JP Laid-open Patent Publication No. 2014-095469
[Patent Document 4] JP Patent No. 4261083

### SUMMARY OF THE INVENTION

In the case of air-oil lubrication, lubricating oil is supplied in the following ways: a part of the lubricating oil is injected through supply holes and directly adheres in the form of mist to the ball surfaces; and a part of the lubricating oil temporarily adheres to the inner diametric surface of the retainer and/or the inner diametric surface of the outer ring inside the bearing and is moved due to high-speed rotation to the ball surfaces.

A possible way to increase adhesion of the lubricant to the inner diametric surface of the retainer is, for example, to increase the width of the retainer. Where the retainer extends beyond the width of the bearing, a problem arises such as interference of the retainer with surrounding component, or deterioration in ease of handing of the bearing. Another possible way is to reduce the number of the balls or reduce the ball diameter so as to increase the area of the inner diametric surface of the retainer and thereby increase adhesion of the lubricating oil. However, this may cause a problem such as reduced load capacity of the bearing, which may lead to reduction in rigidity of the spindle or reduction in allowable axial load.

An object of the present invention is to provide an angular contact ball bearing as well as a retainer for such an angular contact ball bearing capable of retaining more lubricant on an inner peripheral surface of a retainer in a limited space within the bearing while ensuring load capacity of the bearing.

An angular contact ball bearing according to the present invention includes: an inner ring, an outer ring, a plurality of balls interposed between the inner ring and the outer ring, and a retainer having a cylindrical shape and including pockets configured to hold the balls at plurality of positions in a circumferential direction of the retainer,
wherein the retainer has an area ratio in a range of 0.35 or larger and 0.5 or smaller, the area ratio being a proportion of an area of an inner peripheral surface of the retainer exclusive of the pockets to a total ball surface area obtained by multiplying a surface area of a ball by the number of the balls.

As used herein, the area of the inner peripheral surface exclusive of the pockets means a projected area of the part of the inner peripheral surface of the retainer except for the pockets, projected in a radial direction on an imaginary cylindrical surface which defines an inner diameter of the cylindrical retainer.

Where the bearing has a large area ratio, which is a proportion of the area of the inner peripheral surface of the retainer exclusive of the pockets to the total ball surface area, the bearing is stably lubricated. However, if the area of the inner peripheral surface of the retainer is increased in a limited space within the bearing, it is necessary to reduce the size of the balls or reduce the number of the balls, which results in lower load capacity of the bearing and, therefore, lower rigidity of the bearing.

On the other hand, if the size or the number of the balls is increased to achieve high load capacity and high rigidity, the area of the inner peripheral surface of the retainer is reduced, so that less lubricant is retained. As a consequence, for example, oil film is barely formed, so that the raceway surface may be poorly lubricated. If oil supply is increased to avoid this, mist dispersion from the spindle may cause a problem.

According to this constitution, the retainer has an area ratio in a range of 0.35 or larger and 0.5 or smaller, which is a proportion of the area (the projected area) of the inner peripheral surface of the retainer exclusive of the pockets to the total ball surface area, so that it is possible to retain more lubricant on the inner peripheral surface of the retainer in a limited space within the bearing while ensuring load capacity of the bearing. Since this makes it possible to increase the amount of the lubricant adhering to the inner peripheral surface of the retainer without making the retainer width larger than the bearing width, possible interference is prevented between the retainer and surrounding components, so that ease of handling of the bearing is improved. Further, since this makes it possible to increase the amount of the lubricant adhering to the inner peripheral surface of the retainer without making the ball diameter smaller or reducing the number of the balls, it is possible to ensure the load capacity of the bearing and to increase the rigidity of the spindle. Thus, poor lubrication is prevented, so that it is possible to extend bearing life, and to achieve high load capacity and high rigidity simultaneously.

The angular contact ball bearing may be used with air-oil lubrication. In this case, the lubricant supplied to a bearing space is distributed to and temporarily retained on the inner peripheral surface of the retainer and an inner peripheral surface of the outer ring, for example, due to centrifugal force generated as the inner ring is rotated. The lubricant on the inner peripheral surface of the retainer and the inner peripheral surface of the outer ring adheres to the surfaces of the balls and is delivered to the raceway surface of the inner ring and the pockets of the retainer, so that oil film is stably formed for a long period of time, allowing the bearing to be smoothly operated. Therefore, it is possible to effectively extend bearing life even with a small amount of lubricant.

The retainer may be an outer-ring-guided retainer configured to be guided by an inner peripheral surface of the outer ring. In this case, a part of the lubricant inside the bearing is supplied to a guided surface of the retainer, which is guided by the inner peripheral surface of the outer ring, so that it is possible to prevent excessive wear of the guided surface. Thus, the bearing can be operated at a higher speed.

The retainer may be a rolling-element-guided retainer configured to be guided by rolling elements that are the balls. In this case, there is a larger radial space between the retainer and the inner peripheral surface of the outer ring, so that the lubricant can be efficiently retained in this space.

The bearing has a ball diameter ratio in a range of 0.48 or larger and 0.56 or smaller, the ball diameter ratio being a proportion of a diameter dimension of a ball to a bearing width dimension. Where the ratio of the ball diameter to the bearing width dimension falls within a range of 0.48 or larger and 0.56 or smaller, and the area ratio, which is a proportion of the area of the inner peripheral surface of the retainer exclusive of the pockets to the total ball surface area, falls within a range of 0.35 or larger and 0.5 or smaller, it is possible to achieve high-speed performance and high rigidity simultaneously, to form oil film even with a small amount of lubricant, and to effectively extend bearing life.

Where the ratio of the ball diameter to the bearing width dimension is smaller than 0.45, the bearing has reduced load capacity and allowable axial load and thus has low rigidity. Where the ratio of the ball diameter to the bearing width dimension exceeds 0.55, the bearing has higher temperature during operation in a high-speed range where a dn value, which is calculated by multiplying the inner diameter of the inner ring of the bearing by a rotational speed, exceeds e.g. 1200000. For example, such a bearing is not suitable for use as a spindle bearing for a machine tool, which is sought to have lower operation temperature.

A retainer for an angular contact ball bearing according to the present invention is configured to be used in the angular contact ball bearing including: an inner ring, an outer ring, and a plurality of balls interposed between the inner ring and the outer ring,
the retainer having a cylindrical shape and including pockets configured to hold the balls at plurality of positions in a circumferential direction of the retainer,
wherein the retainer has an area ratio in a range of 0.35 or larger and 0.5 or smaller, the area ratio being a proportion of an area of an inner peripheral surface of the retainer exclusive of the pockets to a total ball surface area obtained by multiplying a surface area of a ball by the number of the balls.

According to this constitution, the retainer has an area ratio in a range of 0.35 or larger and 0.5 or smaller, which is a proportion of the area of the inner peripheral surface of the retainer exclusive of the pockets to the total ball surface area, so that it is possible to retain more lubricant on the inner peripheral surface of the retainer in a limited space within the bearing while ensuring load capacity of the bearing. Since this makes it possible to increase the amount of the lubricant adhering to the inner peripheral surface of the retainer without making the retainer width larger than the bearing width, possible interference is prevented between the retainer and surrounding components, so that ease of handling of the bearing is improved. Further, since this makes it possible to increase the amount of the lubricant adhering to the inner peripheral surface of the retainer without making the ball diameter smaller or reducing the number of the balls, it is possible to ensure the load capacity of the bearing and to increase the rigidity of the spindle. This makes it possible to prevent poor lubrication thanks to retainment of the lubricant so as to extend bearing life and to achieve high load capacity and high rigidity simultaneously.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a sectional view of an angular contact ball bearing according to an embodiment of the present invention;
Fig. 2(A) is a sectional view of a retainer for the angular contact ball bearing;
Fig. 2(B) shows a part of an inner peripheral surface of the retainer in an enlarged manner;
Fig. 2(C) is an enlarged partial sectional view of the retainer along a plane perpendicular to an axial direction;
Fig. 3 shows an exemplary comparison among angular contact ball bearings of the present invention and angular contact ball bearings of conventional examples;
Fig. 4 illustrates positioning of angular contact ball bearings according to the present invention with respect to conventional technologies;
Fig. 5 is a sectional view of an angular contact ball bearing according to another embodiment of the present invention; and
Fig. 6 is a sectional view schematically showing a high-speed operation tester.

### DESCRIPTION OF THE EMBODIMENTS

### First Embodiment

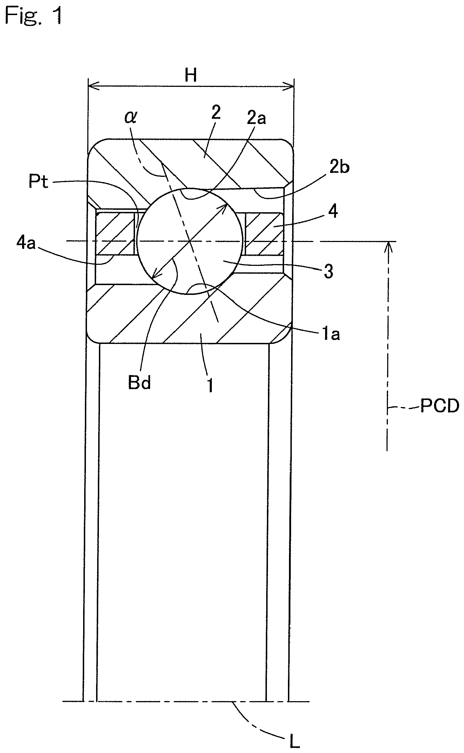

An angular contact ball bearing according to an embodiment of the present invention will be described with reference to Fig. 1 to Fig. 4.

As shown in Fig. 1, the angular contact ball bearing includes an inner ring 1, an outer ring 2, a plurality of balls 3 interposed between the inner and outer rings 1, 2, and a retainer 4 for retaining the plurality of balls 3. The angular contact ball bearing is used with air-oil lubrication which supplies, for example, lubricant along with compressed air into a bearing space. The balls 3 are rotatably retained at predetermined intervals in a circumferential direction by the retainer 4.

A raceway surface 1a is formed on an outer peripheral surface of the inner ring, and a raceway surface 2a is formed on an inner peripheral surface of the outer ring, such that the raceway surfaces 1a, 2a are in contact with the balls 3 at a predetermined contact angle α. On the inner peripheral surface of the outer ring, a counterbore 2b is formed on one side of the raceway surface 2a, i.e., at a part of the inner peripheral surface on an opposite side from the side toward which the contact angle α is inclined, with respect to the raceway surface 2a. The counterbore has a gradually increasing inner diameter toward axially outside.

### Retainer 4 and the Like

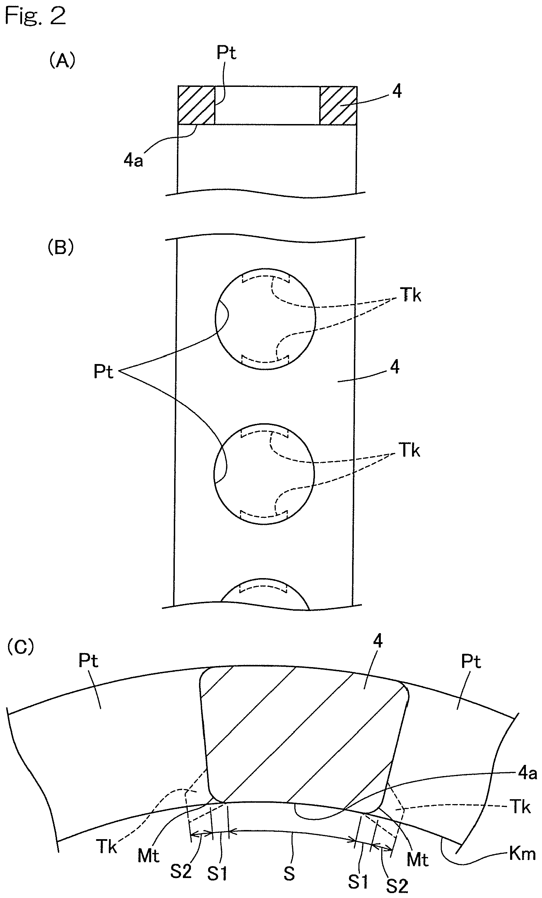

As shown in Fig. 1 and Fig. 2, the retainer 4 is an outer-ring-guided retainer configured to be guided by the inner peripheral surface of the outer ring. The retainer 4 is formed in a cylindrical shape and is made of a resin material such as nylon reinforced by e.g. glass fibers or carbon fibers, or a polyamide resin having a high melting point, a polyether ether ketone resin (abbreviated as PEEK material), or a phenol resin. As shown in Fig. 2(A), the retainer 4 has a rectangular cross section as viewed along a plane including an axis L (Fig. 1) of the retainer 4. As shown in Fig. 2(A) and Fig. 2(B), the retainer has a plurality of pockets Pt for retaining balls 3 (Fig. 1) at a plurality of positions in the circumferential direction, the pockets being formed on a central part of the retainer in the axial direction.

As shown in Fig. 1, an inner peripheral surface 4a of the retainer 4 has a radial dimension smaller than a pitch circle diameter PCD of the balls 3. An outer peripheral surface of the retainer 4 has a dimension larger than the pitch circle diameter PCD and smaller than the inner peripheral surface of the outer ring.

Specifically, the retainer 4 is constructed such that an area ratio falls in a range of 0.35 or larger and 0.5 or smaller, which is a proportion of an area of the inner peripheral surface 4a of the retainer 4 exclusive of the pockets Pt to a total ball surface area obtained by multiplying a surface area of a ball 3 by the number of the balls.

As shown in Fig. 2(C), the area of the inner peripheral surface 4a exclusive of the pockets Pt means a projected area of the part of the inner peripheral surface of the retainer 4 except for the pockets Pt, projected in a radial direction on an imaginary cylindrical surface Km which defines an inner diameter of the cylindrical retainer 4. It should be noted that the projected area includes a projected surface part generated by projection from an outer diametric side toward an inner diametric side in the radial direction and a projected surface part generated by projection from the inner diametric side toward the outer diametric side. Therefore, for example, where each pocket Pt is formed with chamfers Mt at inner-diametric-side edge portions of the pocket, the area of the inner peripheral surface 4a exclusive of the pockets Pt also includes areas S1 of the chamfers Mt projected on the cylindrical surface Km from the outer diametric side toward the inner diametric side in the radial direction. For example, where each pocket Pt is formed with protruding parts Tk for retaining a ball at the inner-diametric-side edge portions of the pocket as shown in Fig. 2(B) and Fig. 2(C), the area of the inner peripheral surface 4a exclusive of the pockets Pt also includes areas S2 of the protruding parts Tk projected from the inner diametric side toward the outer diametric side in the radial direction. As shown in Fig. 2(B), the other part of each pocket Pt where the protruding parts Tk are not formed on the inner-diametric-side edge portions is not included in the area of the inner peripheral surface 4a.

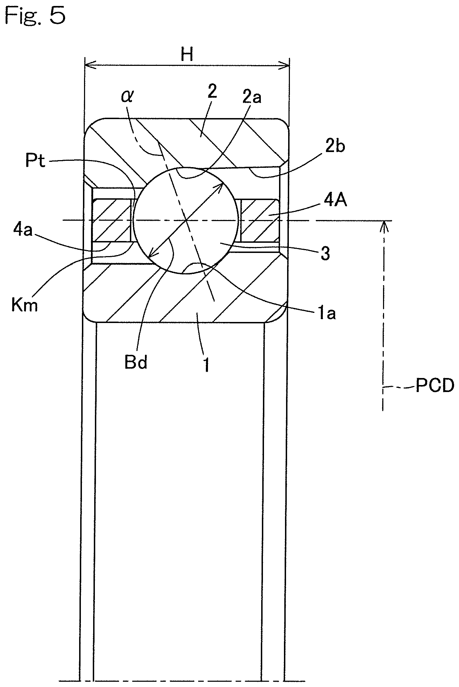

Further, the bearing has a ball diameter ratio in a range of 0.48 or larger and 0.56 or smaller, the ball diameter ratio being a proportion of a diameter dimension Bd of a ball 3 to a bearing width dimension H. Even in a rolling-element-guided retainer which will be described later, an area of an inner peripheral surface of the retainer means a projected area of the part of the inner peripheral surface of the retainer 4A (Fig. 5) exclusive of pockets, projected in a radial direction on an imaginary cylindrical surface Km (Fig. 5) which defines the inner diameter of the cylindrical retainer 4A (Fig. 5), and the retainer 4A is also constructed such that the area ratio falls in a range of 0.35 or larger and 0.5 or smaller and further the ball diameter ratio falls in a range of 0.48 or larger and 0.56 or smaller.

### Exemplary Comparison

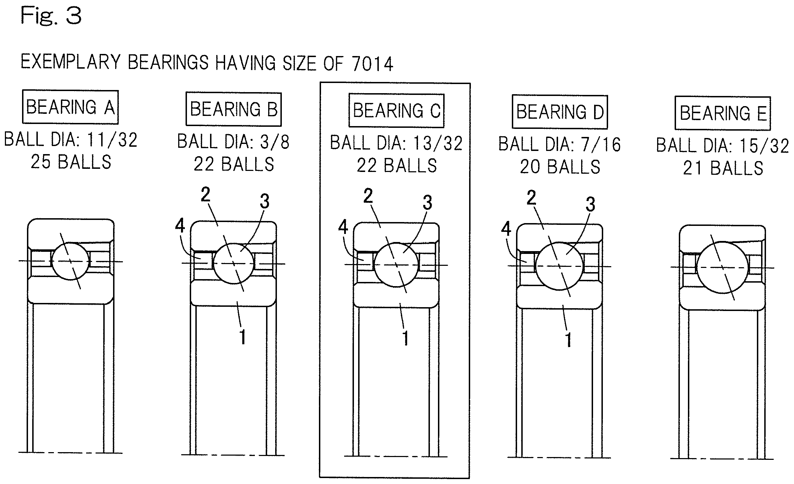

Fig. 3 shows an exemplary comparison among angular contact ball bearings (bearings B, C, D) according to the present embodiment and angular contact ball bearings (bearings A, E) of conventional examples.

The bearing A of a conventional example is e.g. an angular contact ball bearing having a size of bearing designation "7014" and is specified as a small-diameter ball for high-speed operation. Specifically, the bearing A includes 25 balls, each ball having a diameter dimension of about 8.731 mm (11/32 inch).

The bearing E of a conventional example is e.g. an angular contact ball bearing having a size of bearing designation "7014" and is specified as a standard ball. Specifically, the bearing E includes 21 balls, each ball having a diameter dimension of about 11.906 mm (15/32 inch).

On the other hand, the bearings B, C, D, which are angular contact ball bearings according to the present embodiment, are e.g. angular contact ball bearings having a size of bearing designation "7014" and having an area ratio in a range of 0.35 or larger and 0.5 or smaller and a ball diameter ratio in a range of 0.48 or larger and 0.56 or smaller.

The bearing C includes 22 balls, each ball 3 having a diameter dimension of about 10.319 mm (13/32 inch).

The bearing B includes 22 balls, each ball 3 having a diameter dimension of about 9.52 5mm (3/8 inch).

The bearing D includes 20 balls, each ball 3 having a diameter dimension of about 11.113 mm (7/16 inch).

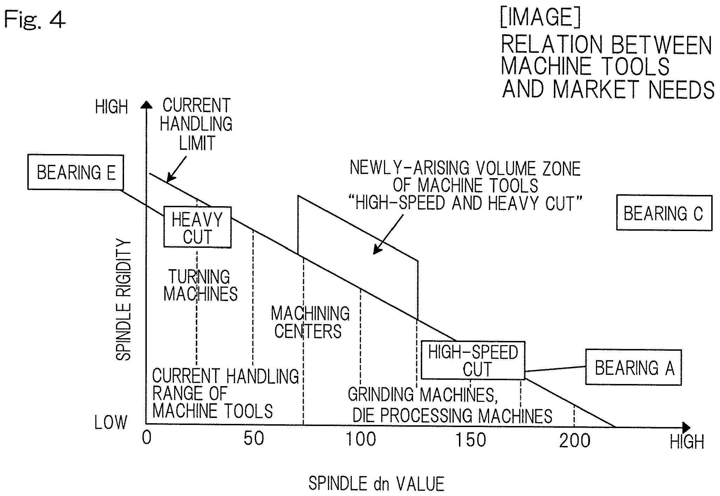

Fig. 4 illustrates positioning of angular contact ball bearings according to the present invention with respect to conventional technologies.

Conventionally, type E bearings are used in low-speed heavy cut, and type A bearings are used in high-speed light cut. As a recent trend, however, there is a demand for machine tool spindles which are designed to have higher rigidity than that of conventional ones while being restricted in operation in a high-speed range (dn value up to 1250000). To meet the demand, the spindle bearings B, C, D (see Fig. 3, in particular, the bearing C) specialized for the operating range (dn value from 700000 to 1250000) are provided.

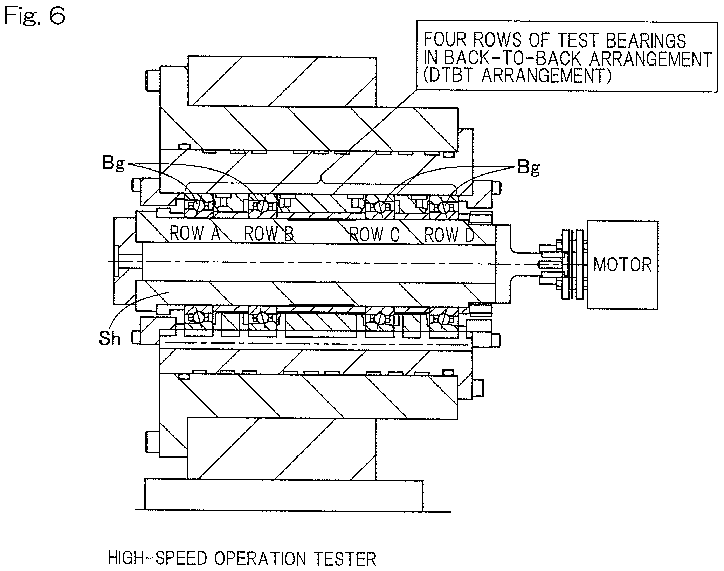

Table 1 below shows the results of evaluation test of the bearings in terms of high-speed performance, load capacity, allowable axial load, and durability in high-speed operation. The same test was carried out for angular contact ball bearings with different bearing designation "7020," in addition to those with bearing designation "7014." The test conditions are as follows: a spindle Sh was provided with four rows of angular contact ball bearings Bg in back-to-back arrangement as shown in Fig. 6; ceramic ball were used as rolling elements of the respective bearings Bg; air-oil lubrication was performed with a VG32 lubricating oil; and inner rings of the bearings were rotated at a rotational speed of 18000 rpm, under a preload of 1400N applied to the bearings incorporated on the spindle. Evaluation was made by observation of each bearing for a period of 100 hours after starting the test and subsequent observation of an internal condition of each bearing. The evaluation standards used in Table 1 are as follows.

### <High-Speed Performance>

++: a bearing is evaluated as having excellent high-speed performance when temperature rise of 20C(Celsius degree) or lower is observed in its outer ring during operation.
+: a bearing is evaluated as having acceptable high-speed performance when temperature rise exceeding 20C but being 25C or lower is observed in its outer ring during operation.
-: a bearing is evaluated as having insufficient high-speed performance when temperature rise exceeding 25C is observed in its outer ring during operation.

### <Load Capacity> (*values calculated on the basis of internal parameters of bearings)

++: a bearing is evaluated as having excellent load capacity when a value calculated on the basis of internal specification indicates that the bearing as a single row can withstand, with a sufficient margin, heavy cut processing performed by a machining center for which the bearing is intended to be used.
+: a bearing is evaluated as having acceptable load capacity when a value calculated on the basis of internal specification indicates that the bearing as a single row can withstand heavy cut processing performed by a machining center for which the bearing is intended to be used.
-: a value calculated on the basis of internal specification indicates that two rows of bearings should be arranged parallel to withstand heavy cut processing performed by a machining center for which the bearings are intended to be used.

### <Allowable Axial Load> (*values calculated on the basis of internal parameters of bearings)

++: a bearing is evaluated as having excellent allowable axial load when a value calculated on the basis of internal specification indicates that the bearing as a single row can withstand, with a sufficient margin, unclamp load from a machining center for which the bearing is intended to be used.
+: a bearing is evaluated as having acceptable allowable axial load when a value calculated on the basis of internal specification indicates that the bearing as a single row can withstand unclamp load from a machining center for which the bearing is intended to be used.
-: a bearing is evaluated as having insufficient allowable axial load when a value calculated on the basis of internal specification indicates that two rows of bearings should be arranged parallel to withstand unclamp load from a machining center for which the bearing is intended to be used.

### <Durability in High-Speed Operation>

++: a bearing is evaluated as having excellent durability when the bearing exhibits no abnormal temperature rise or abnormal vibration by 100 hours after starting the test and when no abnormality is observed inside the bearing after the test.
+: a bearing is evaluated as having acceptable durability when the bearing exhibits notable temperature rise and vibration increase by 100 hours after starting the test, but returns to a stable state afterward and continues operating and when no abnormality is observed inside the bearing after the test.
-: a bearing is evaluated as having insufficient durability when the bearing exhibits notable temperature rise and vibration increase by 100 hours after starting the test and when surface roughness and/or wear are observed inside the bearing after the test.

**[Table 1]**

| Item | | A | B | C | D | E |
|---|---|---|---|---|---|---|
| High-speed performance | | ++ | ++ | ++ | + | - |
| Durability in high-speed operation | | ++ | ++ | ++ | + | - |
| Load capacity | | - | + | ++ | ++ | ++ |
| Allowable axial load | | - | + | ++ | ++ | ++ |
| Area of retainer inner peripheral surface / total ball surface area | 7014 | 0.59 | 0.47 | 0.42 | 0.38 | 0.27 |
| | 7020 | 0.56 | 0.47 | 0.44 | 0.41 | 0.25 |
| Ball diameter dimension / bearing width dimension | 7014 | 0.44 | 0.48 | 0.52 | 0.55 | 0.6 |
| | 7020 | 0.43 | 0.50 | 0.53 | 0.56 | 0.63 |

### Effects and Advantages

According to the angular contact ball bearing and the angular contact ball bearing retainer 4 as described above, the bearing and the retainer have an area ratio in a range of 0.35 or larger and 0.5 or smaller, which is a proportion of the area of the inner peripheral surface 4a of the retainer 4 exclusive of the pockets Pt to the total ball surface area, so that it is possible to retain more lubricant on the inner peripheral surface 4a of the retainer 4 in a limited space within the bearing while ensuring a load capacity of the bearing. Since this makes it possible to increase the amount of the lubricant adhering to the inner peripheral surface 4a of the retainer 4 without making the retainer width larger than the bearing width, possible interference is prevented between the retainer 4 and surrounding components, so that ease of handling of the bearing is improved. Further, since this makes it possible to increase the amount of the lubricant adhering to the inner peripheral surface 4a of the retainer 4 without making the ball diameter smaller or reducing the number of the balls, it is possible to ensure the load capacity of the bearing and to increase the rigidity of the spindle. Thus, it is possible to prevent poor lubrication thanks to retainment of lubricant, to extend bearing life, and to achieve high load capacity and high rigidity simultaneously.

The angular contact ball bearing is air-oil lubricated, in which an extremely small amount of lubricant is supplied and is distributed to and temporarily retained on the inner peripheral surface 4a of the retainer 4 and the inner peripheral surface of the outer ring due to centrifugal force generated as the inner ring is rotated. The lubricant on the inner peripheral surface 4a of the retainer 4 and the inner peripheral surface of the outer ring adheres to the surfaces of the balls and is delivered to the raceway surface 1a of the inner ring and the pockets Pt of the retainer 4, so that the bearing can be smoothly operated for a long period of time.

The retainer 4 is an outer-ring-guided retainer configured to be guided by the inner peripheral surface of the outer ring. A part of the lubricant inside the bearing is supplied to a guided surface of the retainer 4, which is guided by the inner peripheral surface of the outer ring, so that it is possible to prevent excessive wear of the guided surface. Thus, the bearing can be operated at a higher speed.

### Other Embodiments

As shown in Fig. 5, the angular contact ball bearing includes a rolling-element-guided retainer as a retainer 4A, which is configured to be guided by rolling elements, i.e., balls 3. The rest of the configuration is the same as the embodiment as described above. According to the constitution of Fig. 5, there is a larger radial space between the retainer 4A and the inner peripheral surface of the outer ring, so that the lubricant can be efficiently retained in the space.

Although not illustrated, a seal which does not come into contact with the outer peripheral surface of the inner ring may be provided at axially opposite ends of or one axial end of the inner peripheral surface of the outer ring. For example, the inner peripheral surface of the outer ring is formed with a seal attachment groove, and an outer-diametric-side end portion of the seal is attached to the seal attachment groove. In this case, it is possible to retain a greater amount of grease inside the bearing.

The lubrication system of the angular contact ball bearing is not limited to air-oil lubrication or oil mist lubrication and may be grease lubrication.

Although the present invention has been described in terms of the preferred examples thereof with reference to the drawings, those skilled in the art would readily arrive at various changes and modifications within the scope of the present invention defined by the appended claims.

### [Reference Numerals]

- 1: inner ring
- 2: outer ring
- 3: ball
- 4, 4A: retainer
- 4a: inner peripheral surface of the retainer
- Pt: pocket

## Claims

1. An angular contact ball bearing comprising: an inner ring (1), an outer ring (2), a plurality of balls (3) interposed between the inner ring (1) and the outer ring (2), and a retainer (4; 4A) having a cylindrical shape and including pockets (Pt) configured to hold the balls (3) at plurality of positions in a circumferential direction of the retainer (4; 4A),
**characterized in that** the retainer has an area ratio in a range of 0.35 or larger and 0.5 or smaller, the area ratio being a proportion of an area of an inner peripheral surface (4a) of the retainer (4; 4A) exclusive of the pockets (Pt) to a total ball surface area obtained by multiplying a surface area of a ball (3) by the number of the balls (3),wherein the bearing has a ball diameter ratio in a range of 0.48 or larger and 0.56 or smaller, the ball diameter ratio being a proportion of a diameter dimension of a ball to a bearing width dimension, and
wherein, in use, the dn value calculated by multiplying the inner diameter of the inner ring by a rotational speed exceeds 700.000.

2. The angular contact ball bearing as claimed in claim 1, wherein the angular contact ball bearing is used with air-oil lubrication.

3. The angular contact ball bearing as claimed in claim 1 or 2, wherein the retainer (4; 4A) is an outer-ring-guided retainer configured to be guided by an inner peripheral surface of the outer ring (2).

4. The angular contact ball bearing as claimed in claim 1 or 2, wherein the retainer (4; 4A) is a rolling-element-guided retainer (4; 4A) configured to be guided by rolling elements that are the balls (3).

## Patentansprüche

1. Schrägkugellager, umfassend: einen Innenring (1), einen Außenring (2), eine Vielzahl von Kugeln (3), die zwischen dem Innenring (1) und dem Außenring angeordnet sind, und eine Halteeinrichtung (4; 4A), die eine zylindrischen Form aufweist und Taschen (Pt) umfasst, die dazu ausgebildet sind, die Kugeln (3) in einer Umfangsrichtung der Halteeinrichtung (4; 4A) in einer Vielzahl von Positionen zu halten, **dadurch gekennzeichnet, dass** die Halteeinrichtung ein Flächenverhältnis in einem Bereich von 0,35 oder größer und 0,5 oder kleiner aufweist, wobei das Flächenverhältnis ein Verhältnis einer Fläche einer Innenumfangsfläche (4a) der Halteeinrichtung (4; 4A) ohne die Taschen (Pt) zu einer Gesamtkugeloberfläche, die durch das Multiplizieren einer Oberfläche einer Kugel (3) mit der Anzahl der Kugeln (3) erhalten wird, ist, wobei das Lager ein Kugeldurchmesserverhältnis in einem Bereich von 0,48 oder größer und 0,56 oder kleiner aufweist, wobei das Kugeldurchmesserverhältnis ein Verhältnis einer Durchmesserdimension einer Kugel zu einer Lagerbreitendimension ist, und
wobei der DN-Wert, der durch das Multiplizieren des Innendurchmessers des Innenrings mit einer Drehzahl berechnet wird, im Gebrauch 700.000 überschreitet.

2. Schrägkugellager nach Anspruch 1, wobei das Schrägkugellager mit Luft-Öl-Schmierung verwendet wird.

3. Schrägkugellager nach Anspruch 1 oder 2, wobei die Halteeinrichtung (4; 4A) eine außenringgeführte Halteeinrichtung ist, die durch eine Innenumfangsfläche des Außenrings (2) führbar ist.

4. Schrägkugellager nach Anspruch 1 oder 2, wobei die Halteeinrichtung (4; 4A) eine wälzkörpergeführte Halteeinrichtung (4; 4A) ist, die durch Wälzkörper, die Kugeln sind (3), führbar ist.

## Revendications

1. Roulement à billes à contact oblique comprenant : une bague intérieure (1), une bague extérieure (2), une pluralité de billes (3) interposées entre la bague intérieure (1) et la bague extérieure (2), et un élément de retenue (4 ; 4A) ayant une forme cylindrique et comprenant des poches (Pt) configurées pour retenir les billes (3) à une pluralité de positions dans une direction circonférentielle de l'élément de retenue (4 ; 4A),
**caractérisé en ce que** l'élément de retenue a un rapport de surface dans une plage de 0,35 ou supérieur et 0,5 et inférieur, le rapport de surface étant une proportion d'une surface d'une surface (4a) périphérique intérieure de l'élément de retenue (4, 4A) à l'exclusion des poches (Pt) par rapport à une surface de bille totale obtenue en multipliant une surface d'une bille (3) par le nombre de billes (3), dans lequel le roulement a un rapport de diamètre de bille dans une plage de 0,48 ou supérieur et 0,56 ou inférieur, le rapport de diamètre de bille étant une proportion d'une dimension de diamètre d'une bille par rapport à une dimension de largeur du roulement, et
dans lequel la valeur DN calculée en multipliant le diamètre intérieur de la bague intérieure par une vitesse de rotation dépasse 700.000 en utilisation.

2. Roulement à billes à contact oblique selon la revendication 1, dans lequel le roulement à billes à contact oblique est utilisé avec une lubrification air-huile.

3. Roulement à billes à contact oblique selon la revendication 1 ou 2, dans lequel l'élément de retenue (4 ; 4A) est un élément de retenue guidé par la bague extérieure qui est configuré pour être guidé par une surface périphérique intérieure de la bague extérieure (2).

4. Roulement à billes à contact oblique selon la revendication 1 ou 2, dans lequel l'élément de retenue (4 ; 4A) est un élément de retenue (4 ; 4A) guidé par des éléments roulants qui est configuré pour être guidé par des éléments roulants qui sont des billes (3).
